# EUROPÄISCHE PATENTSCHRIFT

(11) **EP 2 901 882 B1**
(45) Veröffentlichungstag und Bekanntmachung des Hinweises auf die Patenterteilung: **03.05.2017**
(21) Anmeldenummer: 14153163.2
(22) Anmeldetag: 30.01.2014
(51) Int. Cl.: A44B 11/25, B60R 22/00, B60R 22/18

(54) **Blockierbare Gurtzunge für einen Dreipunkt-Sicherheitsgurt**
Lockable belt latch for a three-point safety belt
Languette de ceinture pouvant être bloquée pour une ceinture de sécurité à 3 points

(43) Veröffentlichungstag der Anmeldung: 05.08.2015
(73) Patentinhaber: Autoliv Development AB, 447 83 Vårgårda (SE)
(72) Erfinder: Janzen, Knut, 24616 Brokstedt (DE); Kardel, Arno, 25348 Glückstadt (DE); Wunstorf, Tassilo, 22043 Hamburg (DE)
(74) Vertreter: Müller Verweyen

(56) Entgegenhaltungen:
- EP-A2- 1 754 637
- EP-B1- 2 377 417
- WO-A1-2014/013987

## Beschreibung

Die Erfindung betrifft eine blockierbare Gurtzunge für einen Dreipunkt-Sicherheitsgurt mit den Merkmalen des Oberbegriffs von Anspruch 1.

In einem Dreipunkt-Sicherheitsgurtsystem wird das Gurtband durch eine daran angebrachte Gurtzunge, welche mit einem Gurtschloss verbindbar ist, in einen Becken- und einen die Brust des Insassen kreuzenden Diagonalgurt unterteilt. Die Gurtzunge selbst kann in einen Zungengrundkörper und einen Blockierabschnitt unterteilt werden. In dem Zungengrundkörper ist ein Schlitz vorgesehen, durch den der Gurt verschieblich geführt ist, während der Blockierabschnitt mit einer Öffnung versehen ist, mit der die Gurtzunge in einem Gurtschloss verriegelbar ist.

Es hat sich herausgestellt, dass es sinnvoll ist, den freien Gurtdurchlauf, der bei normaler Verwendung des Dreipunktgurtes aus Komfortgründen gegeben ist, im Unfall zu blockieren. Durch die Blockierung des Gurtdurchlaufes in der Gurtzunge wird der Beckengurt von dem Diagonalgurt entkoppelt, so dass beide Gurtabschnitte getrennt voneinander zur Wirkung kommen. Dies hat den Vorteil, dass der Beckengurt während der Vorverlagerung des Insassen im Unfall nicht am Diagonalgurt zieht und dadurch die auf den Brustbereich des Insassen wirkenden Kräfte zusätzlich erhöht. Da das Becken des Insassen grundsätzlich wesentlich mehr Kräfte aufnehmen kann als der Brustbereich, werden die auf den Insassen während des Unfalls einwirkenden Belastungen dadurch hinsichtlich der Verletzungsgefahr für den Insassen optimaler auf die beiden Gurtabschnitte verteilt, so dass die Verletzungsgefahr insgesamt sinkt. Außerdem ergeben sich zusätzliche Sicherheitsvorteile, da ein Durchtauchen des Insassen durch den Beckengurt und/oder ein Herausrutschen des Insassen aus dem Dreipunkt-Sicherheitsgurt bei einem Unfall mit Überschlag dadurch verhindert werden können.

Die gattungsbildende DE 10 2006 005 886 B4 schlägt hierzu eine Gurtzunge vor, die ein C-förmiges Umlenk- und Klemmelement aufweist, welches mit seiner entsprechenden konvexen Außenfläche in einer konkaven Gleitfläche an dem Zungengrundkörper gelagert ist. Das C-förmige Umlenk- und Klemmelement ist über Abbrechnasen gegenüber dem Zungengrundkörper fixiert, welche derart ausgelegt sind, dass sie bei einem Überschreiten einer vorbestimmten Gurtzugskraft abbrechen, und dadurch ein Verschwenken des C-förmigen Umlenk- und Klemmelementes in eine den Gurtdurchlauf blockierende Stellung ermöglichen.

Aus der DE 10 2009 015 202 B3 wird gemäß einer Weiterbildung vorgeschlagen, dass wenigstens ein sich am Zungengrundkörper und dem C-förmigen Umlenk- und Klemmelement (4) abstützendes Federelement vorgesehen ist, welches das C-förmige Umlenk- und Klemmelement in Richtung einer den Gurtdurchlauf freigebenden Grundstellung belastet, und dass das Federelement an der von dem Zungengrundkörper abgewandten Seite des C-förmigen Umlenk- und Klemmelementes oder seitlich der Anlagefläche für den Dreipunkt-Sicherheitsgurt an das Umlenk- und Klemmelement angekoppelt ist.

Durch die vorgeschlagene Lösung wird es ermöglicht, dass das Umlenk- und Klemmelement nach der Blockierung aufgrund der Federbelastung wieder in eine den Gurtdurchlauf freigebende Stellung zurückbewegt wird, und anschließend ohne Beeinträchtigung voll funktionsfähig ist. Dabei ist es von besonderer Bedeutung, dass das Federelement an der von dem Zungengrundkörper abgewandten Seite oder seitlich der Anlagefläche für den Dreipunkt-Sicherheitsgurt an das Umlenk- und Klemmelement angekoppelt ist, damit dieses durch den Dreipunkt-Sicherheitsgurt nicht beschädigt werden kann oder selbst den Gurtdurchlauf stören kann.

Aus der EP 2 377 417 B1 ist es ferner bekannt, die Gurtzunge mit einem Deckel zu versehen, welcher derart angeordnet ist, dass er den aufgeschnittenen hohlen zylindrischen Abschnitt des Zungenhauptkörpers abdeckt. Der Deckel weist eine Vorderkante und eine Hinterkante und zwei gegenüberliegende Abschnitte auf, wovon jeder mit Befestigungsmitteln versehen ist, um den Deckel mit entsprechenden zweiten Befestigungsmitteln, die an zwei gegenüberliegenden seitlichen Erhebungen, die die konkave innere Oberfläche des hohlen zylindrischen Abschnitts begrenzen, vorgesehen sind, zu verbinden. Ferner stützt sich der Deckel über die Vorderkante an dem Zungenhauptkörper ab. Der Deckel weist damit eine vergleichsweise aufwendige Formgebung auf, welche für einen funktionssicheren Verschluss des hohlen zylindrischen Zungenhauptkörpers bestimmte Formtoleranzgrenzen nicht überschreiten oder unterschreiten darf. Dies ist insbesondere deshalb erforderlich, da der Deckel sowohl mit der Vorderkante an dem Zungenhauptkörper anliegen muss und gleichzeitig in Eingriff mit den an den gegenüberliegenden Abschnitten vorgesehenen Befestigungsmitteln mit den zweiten Befestigungsmitteln an den seitlichen Erhebungen in Eingriff gelangen muss.

Aufgabe der Erfindung ist es, eine blockierbare, kostengünstige Gurtzunge der gattungsgemäßen Art mit einem Deckel zu schaffen, welche einfach zu montieren sein soll, und bei der der Hohlraum des C-förmigen Umlenk- und Klemmelementes sicher vor dem Eindringen von Schmutzpartikeln geschützt ist.

Die Aufgabe wird durch eine Gurtzunge mit den Merkmalen des Anspruchs 1 gelöst. Weitere bevorzugte Weiterentwicklungen der Erfindung sind den Unteransprüchen, den Figuren und der zugehörigen Beschreibung zu entnehmen.

Gemäß dem Grundgedanken der Erfindung wird vorgeschlagen, dass der Deckel an wenigstens einer parallel zu der Schwenkachse des C-förmigen Umlenk- und Klemmelementes verlaufenden Randseite des C-förmigen Zungengrundkörpers befestigt ist. Durch die vorgeschlagene Lösung kann der Deckel als einfache Platte ausgeführt werden, da er an den Randseiten des Zungengrundkörpers befestigt ist und die seitlichen Wandungen nicht mehr umfassen muss. Der Deckel kann ferner erheblich einfacher befestigt werden, da er nur an den Randseiten befestigt und nicht mehr aufgeweitet und um die Wandungen herum geclipst werden muss. Die Wandungen und die Randseiten des Zungengrundkörpers bilden praktisch eine Öffnung, in der der plattenförmige Deckel lediglich befestigt werden muss, wobei die Befestigung bewusst an den Randseiten erfolgt und die Stirnseiten der seitlichen Wandungen bewusst nur als Anlageflächen bzw. als seitliche Begrenzung der Öffnung bzw. der Hohlkehle dienen. Ferner muss in den Wandungen kein Befestigungsmittel mehr vorgesehen sein. Unter dem Begriff parallel soll im Sinne der Erfindung auch ein gekrümmter Verlauf verstanden werden, welcher z.B. an eine Kunststoffumspritzung angepasst ist, aber im Mittel parallel zu der Schwenkachse verläuft.

Weiter wird vorgeschlagen, dass der Deckel an den Stirnseiten der sich von der gekrümmten Grundfläche erstreckenden Wandungen anliegt. Die einzige Anforderung an die Wandungen ist dabei, dass die Stirnseiten einer vorbestimmten Formgebung innerhalb eines vorgegebenen Toleranzbereichs entsprechen, damit der Deckel durch die Befestigung an den Randseiten bündig an den Stirnseiten zur Anlage gelangt.

Weiter wird vorgeschlagen, dass an dem Deckel wenigstens ein Positionsstift vorgesehen ist, mit dem der Deckel in eine an einer ersten Randseite vorgesehene Gegenkontur eingreift, und dass der Deckel an der der ersten Randseite gegenüberliegenden zweiten Randseite befestigt ist. Durch die vorgeschlagene Lösung wird der Deckel bewusst nur an einer Randseite befestigt, während er an der gegenüberliegenden Randseite durch die Positionsstifte nur lagefixiert ist. Die Befestigung des Deckels erfolgt in diesem Fall dadurch, indem der Deckel in einem ersten Schritt mit den Positionsstiften in die Gegenkontur eingefügt und dadurch lagefixiert wird und dann z.B. durch eine Schwenkbewegung an der gegenüberliegenden Randseite befestigt wird.

Eine besonders einfache Art der Befestigung, welche insbesondere ohne Werkzeug erfolgen kann, kann dadurch verwirklicht sein, indem die Befestigung des Deckels durch eine Rastverbindung verwirklicht ist. Der Deckel kann z.B. bevorzugt aus einem Kunststoff gespritzt sein, welcher im Bereich der Rastverbindung, z.B. durch elastische Rastarme, die erforderliche Elastizität aufweist, um die Rastbewegung zu ermöglichen.

Weiter wird vorgeschlagen, dass die Wandungen derart geformt sind, dass die Stirnseiten der Wandungen zusammen mit den parallel zu der Schwenkachse des C-förmigen Umlenk- und Klemmelementes verlaufenden Randseiten des C-förmigen Zungengrundkörpers eine ebene Anlagefläche bilden, an der der Deckel anliegt. Durch die vorgeschlagene Lösung kann der Deckel bevorzugt als ebene Platte ausgebildet werden, wodurch die Handhabung der Befestigung, insbesondere bei einer Rastverbindung, weiter vereinfacht werden kann.

Ferner wird vorgeschlagen, dass der Deckel an der dem C-förmigen Zungengrundkörper zugewandten Seite eine Führung für den durch den C-förmigen Zungengrundkörper geführten Dreipunkt-Sicherheitsgurt aufweist. Der Deckel erfüllt dadurch neben dem Verschluss des Hohlraumes des C-förmigen Zungengrundkörpers zusätzlich eine Führungsfunktion für den Dreipunkt-Sicherheitsgurt, wodurch dieser in einem vorbestimmten, für das Bewegungsverhalten günstigen Verlauf gedrängt werden kann. Ferner kann der Dreipunkt-Sicherheitsgurt dadurch vor dem Anlaufen an scharfen Kanten des C-förmigen Zungengrundkörpers geschützt werden. Außerdem kann dadurch verhindert werden, dass der Dreipunkt-Sicherheitsgurt aufgrund ungünstiger Umstände in dem Durchlauf des C-förmigen Zungengrundkörpers aufstaut oder blockiert.

Eine besonders gute Führung kann dadurch verwirklicht werden, indem die Führung durch parallel zur Längsrichtung des durch den C-förmigen Zungengrundkörper verlaufenden Dreipunkt-Sicherheitsgurtes ausgerichtete Rippen gebildet ist. Durch die Rippen wird eine besonders gute Führung geschaffen, bei der zwischen den Rippen bewusst Freiräume vorgesehen sind, in die ungewollt in den Hohlraum des Zungengrundkörpers eingetretene Fremdkörper verdrängt werden können, so dass der Sicherheitsgurt auch in diesem Fall an den Rippen anliegt und geführt ist. Außerdem kann die Führung aufgrund der Ausrichtung der Rippen mit einem möglichst geringen Abrieb des Dreipunkt-Sicherheitsgurtes und möglichst geringen Reibkräften verwirklicht werden.

Die Führung kann weiter verbessert werden, indem die Rippen durch seitliche Querrippen versteift sind.

Ferner kann die Führung weiter verbessert werden, indem die Führung durch eine Schräge gebildet ist, welche derart ausgerichtet ist, dass sie relativ zu dem Deckel in Richtung der Randseite des C-förmigen Zungengrundkörpers, welche der Halteplatte zugewandt ist, ansteigt. Der Dreipunkt-Sicherheitsgurt wird dadurch in Richtung der Randseite des C-förmigen Zungengrundkörpers soweit geführt, dass er die Randseite entweder gar nicht überfährt oder die Randseite zumindest in einer wesentlich kleineren Stufe überfährt, so dass der Abrieb des Sicherheitsgurtes an der Randseite verringert werden kann.

Idealerweise weist die Schräge eine in Richtung der der Halteplatte zugewandten Randseite des C-förmigen Zungengrundkörpers zunehmende Steigung auf. Die Führung ist damit nach Art einer Hohlkehle geformt, welche einen möglichst großen Durchtrittsquerschnitt für den Sicherheitsgurt bei einer gleichzeitig guten Führung über die Randseite des Zungengrundkörpers ermöglicht.

Weiter wird vorgeschlagen, dass der C-förmige Zungengrundkörper mit einem Kunststoff umspritzt ist, und der Deckel an dem Kunststoff befestigt ist. Durch die vorgeschlagene Lösung kann der Zungengrundkörper besonders einfach mit einer für die Anlage und Befestigung des Deckels geeigneten Form versehen werden. Dabei können sowohl die Randseiten, an denen der Deckel befestigt bzw. mittels der Positionsstifte lagefixiert ist, als auch die sich mit der Grundfläche erstreckenden Wandungen, an deren Stirnseite der Deckel anliegt, mit Kunststoff an den Zungengrundkörper angespritzt sein.

Die Erfindung wird im Folgenden anhand einer bevorzugten Ausführungsform unter Bezugnahme auf die beigefügten Figuren erläutert. Dabei zeigt:
- Fig. 1:: eine erfindungsgemäße Gurtzunge mit einem Deckel;

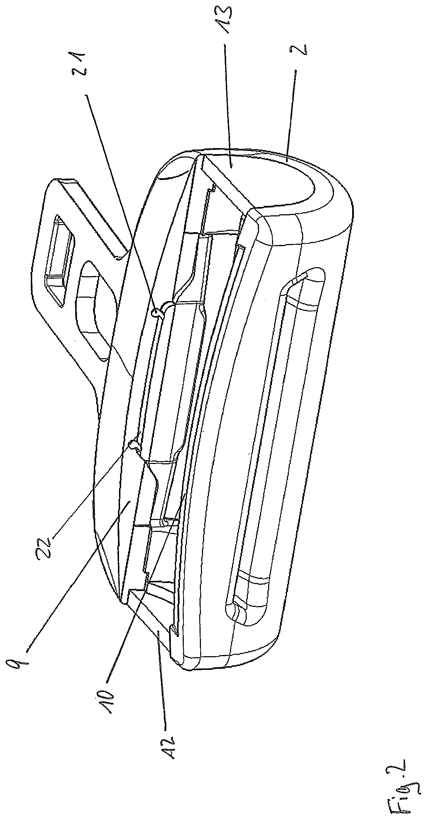

- Fig. 2:: eine erfindungsgemäße Gurtzunge ohne Deckel;
- Fig. 3:: den Deckel in Sicht auf die Unterseite;
- Fig. 4:: eine Gurtzunge und zwei Schnittdarstellungen der Gurtzunge mit einem Deckel in zwei verschiedenen Positionen während der Montage;
- Fig. 5:: einen vergrößerten Ausschnitt einer Schnittdarstellung der Gurtzunge durch die Befestigung des Deckels;
- Fig. 6:: einen Zungengrundkörper mit einem vergrößerten Ausschnitt einer Befestigungsstelle für den Deckel;
- Fig. 7:: eine Gurtzunge mit einem Deckel in einer zweiten Ausführungsform; und
- Fig. 8:: eine Gurtzunge mit einem Deckel in einer dritten Ausführungsform.

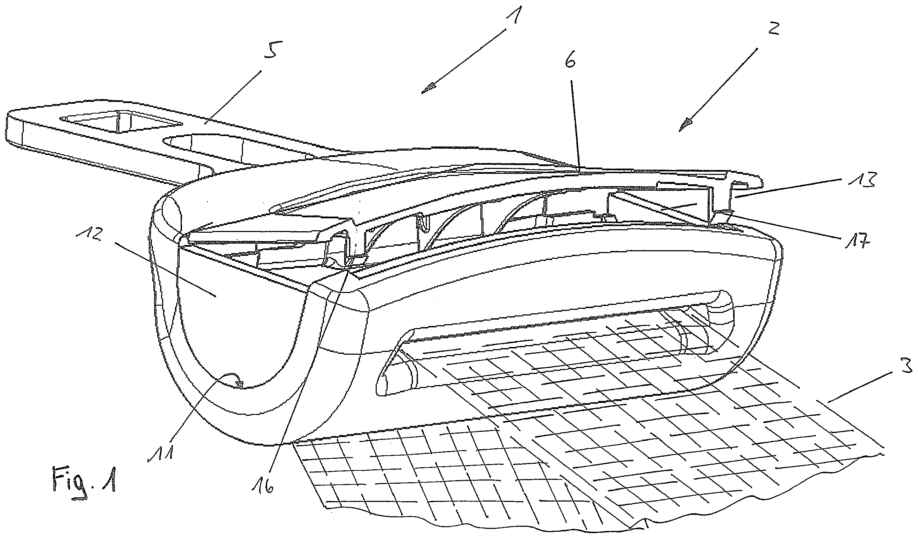

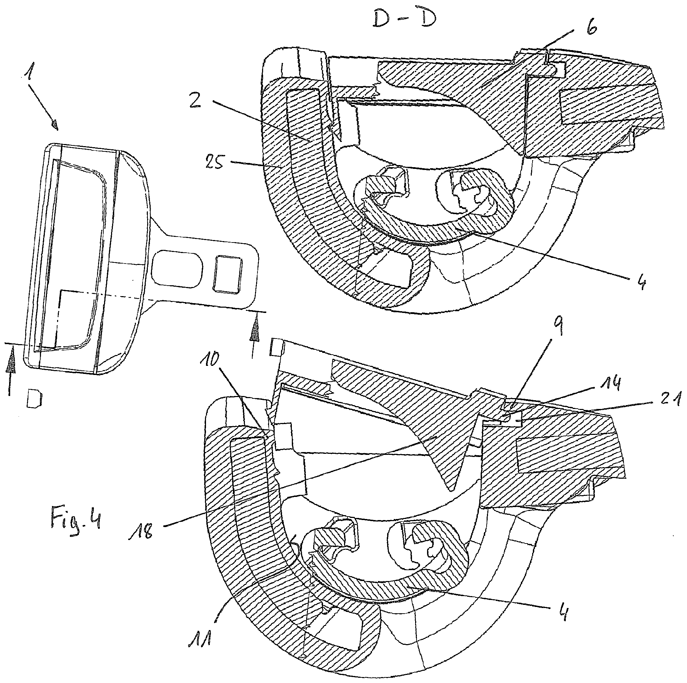

In der Fig. 1 ist die Gurtzunge 1 mit einem Deckel 6 zu erkennen, bevor der Deckel 6 an der Gurtzunge 1 befestigt ist. Die Gurtzunge 1 weist einen C-förmigen Zungengrundkörper 2 und eine daran angeordnete Halteplatte 5 zur Verriegelung in einem nicht dargestellten Gurtschloss einer Sicherheitsgurteinrichtung für ein Kraftfahrzeug auf. Der C-förmige Zungengrundkörper 2 ist durch ein Stanzteil aus Metall in Form einer im Querschnitt C-förmigen hohlkehlenförmigen Halbschale gebildet, welches mit einem in der Fig. 4 zu erkennenden Kunststoff 25 umspritzt ist. Der Kunststoff 25 ist dabei in einer derartigen Formgebung an den Zungengrundkörper 2 angespritzt, dass der C-förmige Zungengrundkörper 2 zwei an den seitlichen Enden des Zungengrundkörpers 2 angeordnete, sich von einer Grundfläche 11 des Zungengrundkörpers 2 erstreckende Wandungen 12 und 13 aufweist, welche die Rinne des C-förmigen Zungengrundkörpers 2 seitlich verschließen. Ferner sind durch den angespritzten Kunststoff 25 zwei parallele Randseiten 9 und 10 an den Zungengrundkörper 2 angeformt, wobei die erste Randseite 9 die Randseite der Hohlkehle ist, welche der Halteplatte 5 zugewandt ist, und die zweite Randseite 10 der ersten Randseite 9 gegenüberliegt. Die parallelen Randseiten 9 und 10 bilden zusammen mit den Stirnseiten der Wandungen 12 und 13 eine in etwa ebene Anlagefläche, an der der Deckel 6 in der Befestigungsstellung anliegt. Alternativ kann der Deckel 6 aber auch zwischen die Wandungen 12 und 13 und/oder die Randseiten 9 und 10 eingesetzt sein, so dass er statt an den Stirnseiten bzw. Stirnflächen anzuliegen, an den Seitenflächen der Wandungen 12 und 13 bzw. der Randeseiten 9 und 10 anliegt.

An der Grundfläche 11 des Zungengrundkörpers 2 ist ein in der Fig. 4 zu erkennendes, C-förmiges Umlenk- und Klemmelement 4 schwenkbeweglich um eine parallel zu den Randseiten 9 und 10 verlaufende Schwenkachse gelagert, welches den angedeuteten Dreipunkt-Sicherheitsgurt 3 im Unfall blockiert und dadurch den Diagonalgurtabschnitt von dem Beckengurtabschnitt entkoppelt. Der Klemmvorgang und die sich daraus ergebenden Vorteile sind in den Druckschriften DE 10 2009 015 202 B3 und DE 10 2006 005 886 A1 näher beschrieben und hier identisch verwirklicht. Damit wird hinsichtlich des Klemmmechanismus ausdrücklich auf diese Druckschriften verwiesen, welche damit zu dem Offenbarungsgehalt dieser Anmeldung ausdrücklich hinzuzurechnen sind.

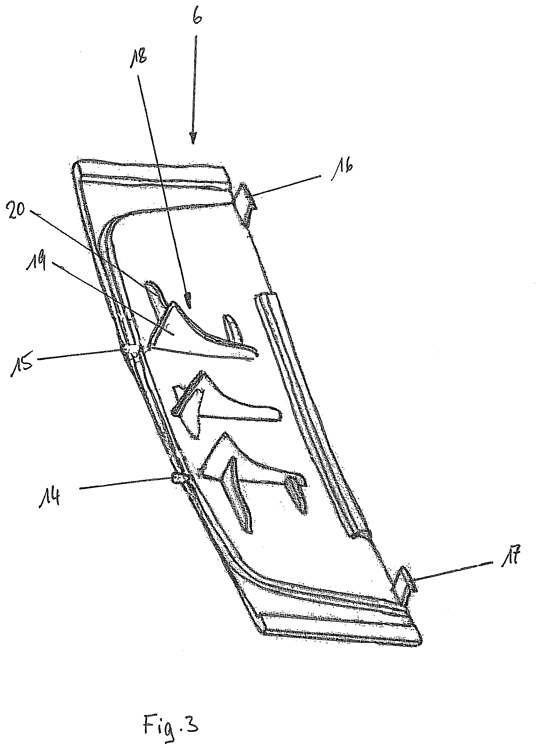

Der in der Fig. 3 dargestellte Deckel 6 weist an der einen Seite zwei Rastarme 16 und 17 und an der gegenüberliegenden Seite zwei Positionsstifte 14 und 15 auf, während an der ersten Randseite 9 des Zungengrundkörpers 2 eine Gegenkontur in Form von zwei Ausnehmungen 21 und 22 und an der zweiten Randseite 10 zwei Rastkanten 23 und 24 vorgesehen sind. Zur Befestigung des Deckels 6 wird dieser mit den Positionsstiften 14 und 15 in einem ersten Schritt in die Ausnehmungen 21 und 22 eingeführt, wodurch er vorpositioniert ist. Anschließend wird der Deckel 6 unter Beibehaltung des Eingriffs der Positionsstifte 14 und 15 in die Ausnehmungen 21 und 22 verschwenkt, bis die Rastarme 16 und 17 hinter den Rastkanten 23 und 24 verrasten. Die Stellung ist in der oberen Darstellung der Fig. 4 zu erkennen.

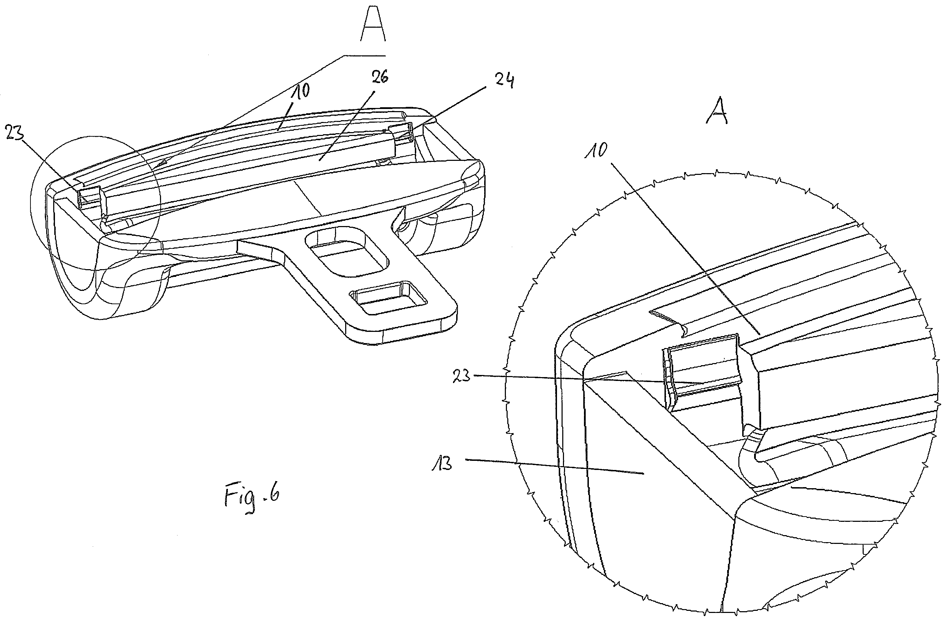

In der Fig. 6 ist der Zungengrundkörper in Sicht auf die Randseite 10 mit den Rastkanten 23 und 24 zu erkennen. Zwischen den Rastkanten 23 und 24 ist ein in Richtung der gegenüberliegenden Randseite 9 vorstehender Vorsprung 26 vorgesehen, welcher beim Aufsetzen des Deckels 6 zwischen die Rastarme 16 und 17 greift. Durch den Vorsprung 26 wird der Deckel 6 während der Schwenkbewegung aus der in der unteren Darstellung der Fig. 4 gezeigten Stellung in die Befestigungsstellung der oberen Darstellung zusätzlich seitlich geführt.

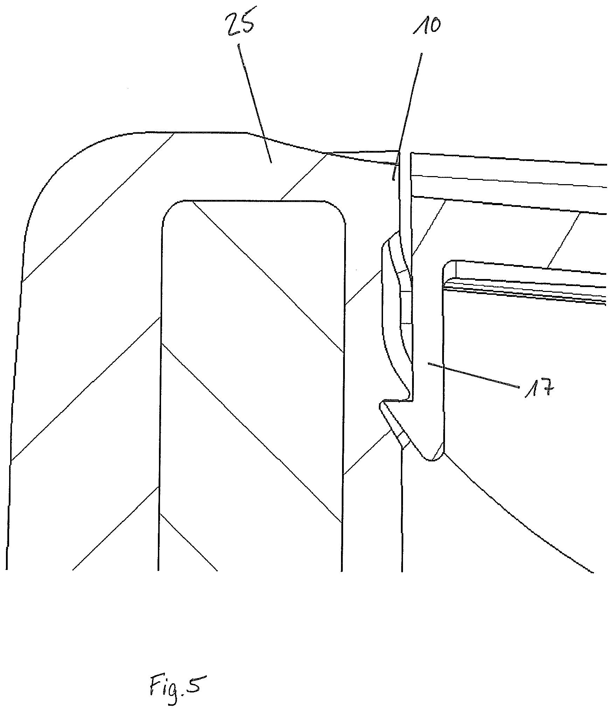

Die Rastarme 16 und 17 sind wie anhand der Darstellung des Rastarmes 17 in der Fig. 5 als federnde Arme mit einer nach außen vorstehenden Spitze ausgebildet. Während der Aufsetzbewegung des Deckels 6 werden die Rastarme 16 und 17 aufgrund ihrer federnden Eigenschaft nach innen gebogen, bis die Rastarme 16 und 17 mit den Spitzen an den Rastkanten 23 und 24 vorbeibewegt wurden und wieder nach außen federn können, so dass sie anschließend hinter den Rastkanten 23 und 24 verrasten.

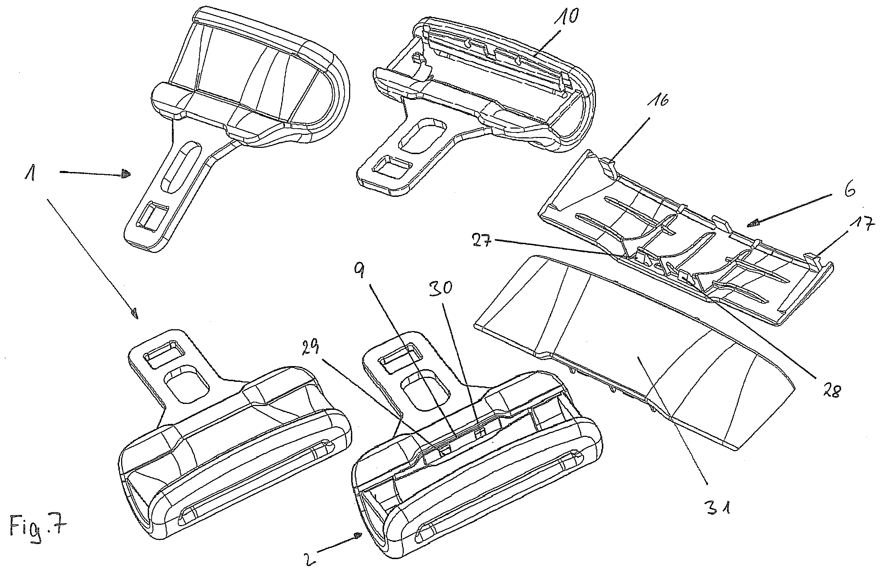

In der Fig. 7 ist eine Gurtzunge 1 mit einem Deckel 6 zu erkennen, welcher statt der Positionsstifte 14 und 15 an der Seite, welche zur Befestigung an der Randseite 9 vorgesehen ist, einen dritten und vierten Rastarm 27 und 28 aufweist. An der ersten Randseite 9 des Zungengrundkörper 2 sind ferner Rastkanten 29 und 30 vorgesehen, welche derart positioniert sind, dass der Deckel 6 daran mit den dritten und vierten Rastarmen 27 und 28 befestigt werden kann. Der Deckel 6 weist ferner eine profilierte Oberfläche 31 auf, durch die die Randseiten 9 und 10 zu einer homogenen bzw. kontinuierlichen Oberfläche ergänzt werden. Dabei kann durch die Profilierung der Oberfläche 31 insbesondere ein konturierter Verlauf der Randseiten 9 und 10 berücksichtigt werden. Dazu sind die den Randseiten 9 und 10 zugewandten Ränder des Deckels 6 bevorzugt an den Verlauf der Randseiten 9 und 10 angepasst.

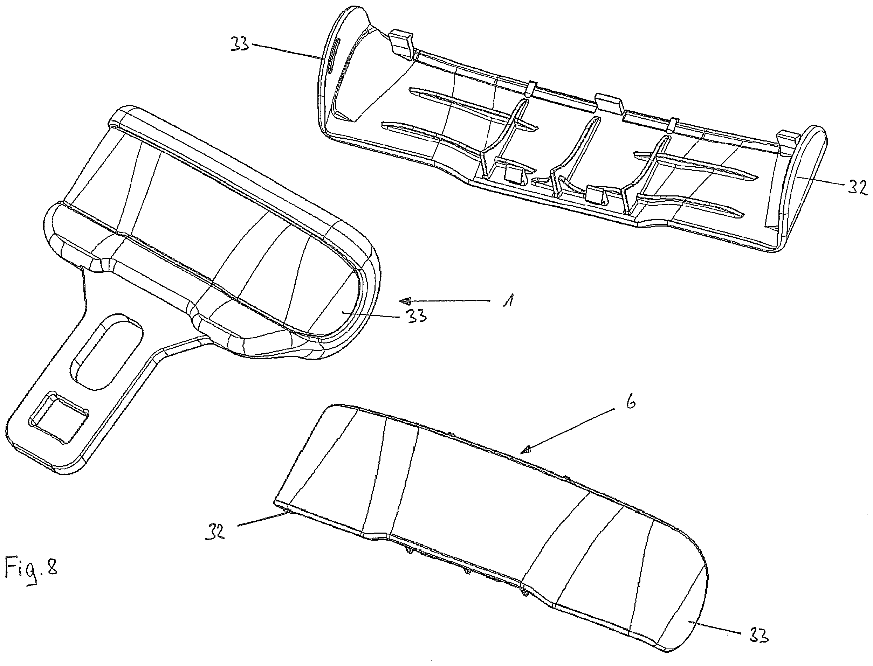

In der Fig. 8 ist eine weitere Ausführungsform des Deckels 6 zu erkennen, bei der der Deckel an den seitlichen Rändern mit die Wandungen 12 und 13 seitlich überlappenden Laschen aufweist, welche für die Befestigung keine Funktion haben, sondern allein aus optischen Gründen vorgesehen sind. Durch die Laschen 32 und 33 kann der Zungengrundkörper 2 mit dem aufgesetzten Deckel 6 ohne einen erkennbaren Spalt in der Sichtoberfläche ausgeführt werden, so dass ein optisch hochwertiges Erscheinungsbild erzielt werden kann. Das Prinzip der vorgeschlagenen Befestigung wird dabei nicht verändert.

## Patentansprüche

1. Gurtzunge (1) für einen Dreipunkt-Sicherheitsgurt (3) mit
- einem C-förmigen Zungengrundkörper (2),
- einer an dem C-förmigen Zungengrundkörper (2) angeordneten Halteplatte (5),
- einem C-förmigen Umlenk- und Klemmelement (4) für den Dreipunkt-Sicherheitsgurt (3),
- welches auf einer gekrümmten Grundfläche (11) des C-förmigen Zungengrundkörpers (2) schwenkbeweglich gelagert ist,
- und durch die von dem Dreipunkt-Sicherheitsgurt (3) ausgeübten Kräfte aus einer Grundstellung, in der der Gurtdurchlauf freigegeben ist, in eine Gurtblockadestellung, in der der Gurtdurchlauf blockiert ist, bewegbar ist, wobei
- an den Randseiten des C-förmigen Zungengrundkörpers (2) jeweils von der gekrümmten Grundfläche (11) vorstehende Wandungen (12,13) vorgesehen sind, und
- einem Deckel (6), welcher die Hohlkehle des C-förmigen Zungengrundkörpers (2) und das in diesen eingelegte C-förmige Umlenk- und Klemmelement (4) wenigstens abschnittsweise abdeckt,
**dadurch gekennzeichnet, dass**
- der Deckel (6) an wenigstens einer parallel zu der Schwenkachse des C-förmigen Umlenk- und Klemmelementes (4) verlaufenden Randseite (9,10) des C-förmigen Zungengrundkörpers (2) befestigt ist.

2. Gurtzunge nach Anspruch 1, **dadurch gekennzeichnet, dass**
- der Deckel (6) an den Stirnseiten der sich von der gekrümmten Grundfläche (11) erstreckenden Wandungen (12,13) anliegt.

3. Gurtzunge (1) nach Anspruch 1 oder 2, **dadurch gekennzeichnet, dass**
- an dem Deckel (6) wenigstens ein Positionsstift (14,15) vorgesehen ist, mit dem der Deckel (6) in eine an einer ersten Randseite (9) vorgesehene Gegenkontur (21,22) eingreift, und
- der Deckel (6) an der der ersten Randseite (9) gegenüberliegenden zweiten Randseite (10) befestigt ist.

4. Gurtzunge (1) nach einem der vorangegangenen Ansprüche, **dadurch gekennzeichnet, dass**
- die Befestigung des Deckels (6) durch eine Rastverbindung verwirklicht ist.

5. Gurtzunge (1) nach einem der vorangegangenen Ansprüche, **dadurch gekennzeichnet, dass**
- die Wandungen (12,13) derart geformt sind, dass die Stirnseiten der Wandungen (12,13) zusammen mit den parallel zu der Schwenkachse des C-förmigen Umlenk- und Klemmelementes (4) verlaufenden Randseiten (9,10) des C-förmigen Zungengrundkörpers (2) eine ebene Anlagefläche bilden, an der der Deckel (6) anliegt.

6. Gurtzunge (1) nach einem der vorangegangenen Ansprüche, **dadurch gekennzeichnet, dass**
- der Deckel (6) an der dem C-förmigen Zungengrundkörper (2) zugewandten Unterseite eine Führung (18) für den durch den C-förmigen Zungengrundkörper (2) geführten Dreipunkt-Sicherheitsgurt (3) aufweist.

7. Gurtzunge (1) nach Anspruch 6, **dadurch gekennzeichnet, dass**
- die Führung (18) durch parallel zur Längsrichtung des durch den C-förmigen Zungengrundkörper (2) verlaufenden Dreipunkt-Sicherheitsgurt (3) angeordnete Rippen (19) gebildet ist.

8. Gurtzunge (1) nach Anspruch 7, **dadurch gekennzeichnet, dass**
- die Rippen (19) durch seitliche Querrippen (20) versteift sind.

9. Gurtzunge (1) nach einem der Ansprüche 6 bis 8, **dadurch gekennzeichnet, dass**
- die Führung (18) durch eine Schräge gebildet ist, welche derart ausgerichtet ist, dass sie relativ zu dem Deckel (6) in Richtung der zweiten Randseite (10) des C-förmigen Zungengrundkörpers (2), welche der Halteplatte (5) zugewandt ist, ansteigt.

10. Gurtzunge (1) nach Anspruch 9, **dadurch gekennzeichnet, dass**
- die Schräge eine in Richtung der der Halteplatte (5) zugewandten zweiten Randseite (10) des C-förmigen Zungengrundkörpers (2) zunehmende Steigung aufweist.

11. Gurtzunge (1) nach einem der vorangegangenen Ansprüche, **dadurch gekennzeichnet, dass**
- der C-förmige Zungengrundkörper (2) mit einem Kunststoff (25) umspritzt ist, und
- der Deckel (6) an dem Kunststoff (25) befestigt ist.

## Claims

1. Belt tongue (1) for a three-point safety belt (3) with
- a C-shaped basic tongue body (2),
- a retaining plate (5) arranged on the C-shaped basic tongue body (2),
- a C-shaped deflection and clamping element (4) for the three-point safety belt (3),
- which is supported on a curved base surface (11) of the C-shaped basic tongue body (2) so as to be movable by swivelling,
- and is movable due to the forces exerted by the three-point safety belt (3) from a basic position, in which the belt passage is released, to a belt blocking position, in which the belt passage is blocked, wherein
- on the sides of the C-shaped basic tongue body (2), walls (12, 13) projecting respectively from the curved base surface (11) are provided, and
- a cover (6), which covers, at least in sections, the hollow groove of the C-shaped basic tongue body (2) and the C-shaped deflection and clamping element (4) inserted into this, **characterised by** that
- the cover (6) is attached to at least one side (9, 10) of the C-shaped basic tongue body (2) running parallel to the swivel axis of the C-shaped deflection and clamping element (4).

2. Belt tongue (1) according to claim 1, **characterised by** that
- the cover (6) rests on the end faces of the walls (12, 13) extending from the curved base surface (11).

3. Belt tongue (1) according to claim 1 or 2, **characterised by** that
- on the cover (6) at least one position pin (14, 15) is provided, with which the cover (6) engages in a counter-contour (21, 22) provided on a first side (9), and
- the cover (6) is attached to the second side (10) lying opposite the first side (9).

4. Belt tongue (1) according to one of the preceding claims, **characterised by** that
- the attachment of the cover (6) is realised by a latching connection.

5. Belt tongue (1) according to one of the preceding claims, **characterised by** that
- the walls (12, 13) are formed in such a way that the end faces of the walls (12, 13) together with the sides (9, 10) of the C-shaped, basic tongue body (2) running parallel to the swivel axis of the C-shaped deflection and clamping element (4) form a flat contact surface on which the cover (6) rests.

6. Belt tongue (1) according to one of the preceding claims, **characterised by** that
- the cover (6) has a guide (18) on the underside facing the C-shaped basic tongue body (2) for the three-point safety belt (3) guided through the C-shaped basic tongue body (2).

7. Belt tongue (1) according to claim 6, **characterised by** that
- the guide (18) is formed by ribs (19) arranged parallel to the longitudinal direction of the three-point safety belt (3) running through the C-shaped, basic tongue body (2).

8. Belt tongue (1) according to claim 7, **characterised by** that
- the ribs (19) are stiffened by lateral cross ribs (20).

9. Belt tongue (1) according to one of claims 6 to 8, **characterised by** that
- the guide (18) is formed by a bevel, which is oriented so that it rises relative to the cover (6) in the direction of the second side (10) of the C-shaped basic tongue body (2), which side faces the retaining plate (5).

10. Belt tongue (1) according to claim 9, **characterised by** that
- the bevel has a pitch that increases in the direction of the second side (10) of the C-shaped basic tongue body (2) facing the retaining plate (5).

11. Belt tongue (1) according to one of the preceding claims, **characterised by** that
- the C-shaped basic tongue body (2) is sprayed with a plastic (25), and
- the cover (6) is attached to the plastic (25).

## Revendications

1. Languette de ceinture (1) pour une ceinture de sécurité à 3 points (3) comprenant
- un corps de base de languette en forme de C (2),
- une plaque de retenue (5) disposée sur le corps de base de languette en forme de C (2),
- un élément de renvoi et de serrage en forme de C (4) pour la ceinture de sécurité à 3 points (3),
- lequel est monté pivotant sur une surface de base incurvée (11) du corps de base de languette en forme de C (2),
- et qui peut être déplacé par les forces exercées par la ceinture de sécurité à 3 points (3) d'une position de base, dans laquelle le passage de la ceinture est libéré, à une position de blocage de ceinture, dans laquelle le passage de la ceinture est bloqué, dans laquelle
- des parois (12, 13) dépassant respectivement de la surface de base incurvée (11) sont prévues sur les côtés de bordure du corps de base de languette en forme de C (2), et
- un couvercle (6), qui recouvre au moins sur certaines parties la gorge creuse du corps de base de languette en forme de C (2) et l'élément de renvoi et de serrage en forme de C (4) placé dans celui-ci,
**caractérisée en ce que**
- le couvercle (6) est fixé à au moins un côté de bordure (9, 10) du corps de base de languette en forme de C (2), qui s'étend parallèlement à l'axe de pivotement de l'élément de renvoi et de serrage en forme de C (4).

2. Languette de ceinture selon la revendication 1, **caractérisée en ce que**
- le couvercle (6) appuie contre les faces frontales des parois (12, 13) qui s'étendent depuis la surface de base incurvée (11).

3. Languette de ceinture (1) selon la revendication 1 ou 2, **caractérisée en ce que**
- au moins un ergot de positionnement (14, 15) est prévu sur le couvercle (6), au moyen duquel le couvercle (6) vient en prise avec un contour complémentaire (21, 22) prévu sur un premier côté de bordure (9), et
- le couvercle (6) est fixé au second côté de bordure (10) opposé au premier côté de bordure (9).

4. Languette de ceinture (1) selon l'une des revendications précédentes, **caractérisée en ce que**
- la fixation du couvercle (6) est réalisée par une liaison à encliquetage.

5. Languette de ceinture (1) selon l'une des revendications précédentes, **caractérisée en ce que**
- les parois (12, 13) sont formées de telle manière que les faces frontales des parois (12, 13) forment, conjointement avec les côtés de bordure (9, 10) du corps de base de languette en forme de C (2) qui s'étendent parallèlement à l'axe de pivotement de l'élément de renvoi et de serrage en forme de C (4), une surface d'appui plane, contre laquelle s'appuie le couvercle (6).

6. Languette de ceinture (1) selon l'une des revendications précédentes, **caractérisée en ce que**
- le couvercle (6) comporte sur la face inférieure tournée vers le corps de base de languette en forme de C (2) un guidage (18) pour la ceinture de sécurité à 3 points (3) guidée à travers le corps de base de languette en forme de C (2).

7. Languette de ceinture (1) selon la revendication 6, **caractérisée en ce que**
- le guidage (18) est formé par des nervures (19) disposées parallèlement à la direction longitudinale de la ceinture de sécurité à 3 points (3) qui s'étend à travers le corps de base de languette en forme de C (2).

8. Languette de ceinture (1) selon la revendication 7, **caractérisée en ce que**
- les nervures (19) sont renforcées par des nervures transversales (20) latérales.

9. Languette de ceinture (1) selon l'une des revendications 6 à 8, **caractérisée en ce que**
- le guidage (18) est formé par une pente, qui est orientée de telle manière qu'elle monte par rapport au couvercle (6) en direction du second côté de bordure (10) du corps de base de languette en forme de C (2), côté qui est tourné vers la plaque de retenue (5).

10. Languette de ceinture (1) selon la revendication 9, **caractérisée en ce que**
- la pente présente une inclinaison croissante en direction du second côté de bordure (10), tourné vers la plaque de retenue (5), du corps de base de languette en forme de C (2).

11. Languette de ceinture (1) selon l'une des revendications précédentes, **caractérisée en ce que**
- le corps de base de languette en forme de C (2) est enrobé d'une matière plastique (25), et
- le couvercle (6) est fixé à la matière plastique (25).
